# EUROPÄISCHE PATENTSCHRIFT

(11) **EP 0 431 377 B1**
(45) Veröffentlichungstag und Bekanntmachung des Hinweises auf die Patenterteilung: **27.10.1993**
(21) Anmeldenummer: 90121999.8
(22) Anmeldetag: 17.11.1990
(51) Int. Cl.: C01G 1/02, C01B 13/18, C01B 33/18, C01F 7/30

(54) **Verfahren zur Herstellung feinteiliger keramischer Oxid-Pulver aus Vorläuferverbindungen**
Process for the preparation of finely divided ceramic oxide powder from precursor compounds
Procédé de préparation de poudre d'oxydes céramiques finement divisés à partir de composés précurseurs

(30) Priorität: 02.12.1989 DE 3939953
(43) Veröffentlichungstag der Anmeldung: 12.06.1991
(73) Patentinhaber: BAYER AG, 51368 Leverkusen (DE)
(72) Erfinder: Krumbe, Wolfgang, Dr., W-4150 Krefeld (DE); Laubach, Benno, Dr., W-4150 Krefeld (DE)

(56) Entgegenhaltungen:
- EP-A- 0 314 166
- FR-A- 2 628 664
- PATENT ABSTRACTS OF JAPAN, Band 7, Nr. 100 (C-164)(1245), 28. April 1983
- PATENT ABSTRACTS OF JAPAN, Band 10, Nr. 203 (C-360)(2259), 16. Juli 1986
- PATENT ABSTRACTS OF JAPAN, Band 10, Nr. 94 (C-338)(2151), 11. April 1986

## Beschreibung

Die vorliegende Erfindung betrifft ein Verfahren zur Herstellung feinteiliger Oxide von Metallen oder Metalloiden der Elemente der III. und IV. Hauptgruppe sowie der III., IV., V. und VI. Nebengruppe des periodischen Systems der Elemente aus den entsprechenden Halogeniden, Alkoxiden, Oxihalogeniden oder halogenierten Organylsilanen, die mit polymerisierbaren kohlenwasserstoffhaltigen Verbindungen zum Polymer umgesetzt werden und das so erhaltene Produkt thermisch zu den entsprechenden Oxiden zersetzt wird.

Keramische Formkörper werden in der Regel durch Sinterung aus feinteiligen Pulvern hergestellt. Neben einer hohen Reinheit zur Verbesserung der Materialeigenschaften wird eine hohe Feinteiligkeit und damit verbunden eine hohe BET zur Verbesserung der Sinteraktivität bei möglichst niedrigen Temperaturen angestrebt.

Bei der Herstellung von Oxiden der Metalle oder Metalloide als keramisches Ausgangsmaterial werden zur Erzielung feinteiliger hochreiner Produkte mit hohen spezifischen Oberflächen verschiedene Herstellverfahren angewendet.

Das Andritz-Ruthner-Sprühröstverfahren, DE-A 2 525 929 bedient sich der Metall- oder Metalloidhalogenidlösungen, die in Gegenwart von Wasserdampf bei 300 bis 950°C in einer sogenannten Pyrohydrolyse thermisch zu den feinteiligen Oxiden oder Mischoxiden zersetzt werden.

Die nach diesem Verfahren sowie nach dem Flammhydrolyseverfahren hergestellten Oxide, Angewandte Chemie 72, 19/20, 744 bis 750 (1960), weisen jedoch unakzeptabel hohe Halogenidgehalte auf, die die Anwendung der Pulver einschränken.

Andere Verfahren verwenden Aluminiumsalze, die in zeitintensiven und kostenintensiven Prozessen durch mehrfaches Umkristallisieren gereinigt und anschließend zur Herstellung von feinteiligem hochreinem Al₂O₃ thermisch zersetzt werden.

Weitere bekannte Verfahren bedienen sich der Pyrolyse oder der Hydrolyse der teuren Metallalkoxide mit anschließender Trocknung. Problematisch bei dem Hydrolyseverfahren ist neben dem hohen Kostenaufwand für die Ausgangsstoffe die breite Teilchengrößenverteilung der Hydrolyseteilchen, die aufgrund der Keimbildungs- und Wachstumsprozesse resultiert. Bei den anschließenden Trocknungsschritten kommt es verstarkt zur Agglomeratbildung insbesondere dann, wenn durch Temperung aus den Hydroxiden die Oxide hergestellt werden.

So beschreibt die FR-A 2 628 664 ein Verfahren, bei dem organische, aliphatische Salze wie Acetate, Propionate oder Citrate mit teuren Metallalkoxiden in wassriger Lösung gemischt werden, die Flüssigkeit mit Polyacrylamid oder Polymethacrylamid und einem Polymerisationsinitiator zu einem gelartigen Polymer umgesetzt wird, das in einem zeitintensiven, aufwendigen Temperaturprozeß bei Temperaturen oberhalb 800°C zu einem pulverigen Metalloxidpulver pyrolisiert wird.

Die EP-A O 314 166 beschreibt ein Hydrolyseverfahren, indem die Oxide oder Hydroxide durch Umsetzung von hydrolysierbaren Verbindungen mit Wasser in einem organischen Lösungsmittel hergestellt werden, wobei die Umsetzung in Anwesenheit eines Komplexbildners, z.B. Acetessigsäureethylester durchgeführt wird.

Problematisch ist, daß es während des Wachstums der Hydrolyseteilchen zur Agglomeration kommt, die durch Zugabe einer notwendigen Stabilisatormenge zur Stabilisierung der Suspension verhindert werden muß.

Nach dem Isolieren der Hydrolyseteilchen kommt es jedoch bei der Trocknung wie oben beschrieben zur Bildung von Agglomeraten die in einer intensiven Mahlbehandlung zerstort werden müssen.

Aufgabe der vorliegenden Erfindung ist es nun, ein Verfahren zur Verfügung zu stellen, mit dem es möglich ist, aus kostengünstigen Rohstoffen feinteilige Oxid-Pulver mit hoher spezifischer Oberfläche und hoher Reinheit herzustellen.

Überraschenderweise wurde nun ein Prozeß gefunden, der diese Anforderungen erfüllt und bei dem die Oxide ohne aufwendige Hydrolyseschritte hergesellt werden.

In einer spontanen Reaktion reagiert dabei das Metall- oder Metalloidhalogenid mit einer C-OH-funktionalen polymerisierbaren Verbindung oder einem solchen Verbindungsgemisch unter Polymerisation zu einem keramischen M-O-C-haltigen Vorprodukt, das durch einfache thermische Behandlung in die gewünschte hochreine feuerfeste Metall- oder Metalloidverbindung umgesetzt werden kann.

Gegenstand dieser Erfindung ist somit ein Verfahren zur Herstellung monodisperser Oxide von Metallen und/oder Metalloiden der Elemente der III. und IV. Hauptgruppe sowie der III., IV., V. und VI. Nebengruppe des periodischen Systems der Elemente aus Verbindungen der Formeln MXₘ und/oder RₙMXₘ₋ₙ und/oder MOₚXₘ₋₂ₚ, wobei X ein Halogen- oder Alkoholatrest ist und R Wasserstoff, Alkyl oder Aryl und n ganzzahlige Werte zwischen eins und der um eins verringerten maximalen Wertigkeitsstufe m des Elements M annehmen kann, p = 1 oder 2 mit m-2p ≧1, durch Umsetzung der Verbindungen oder deren Gemische mit einer reaktiven polymerisierbaren kohlenwasserstoffhaltigen Verbindung, die eine C-OH-Gruppe enthält und/oder einem reaktiven Gemisch kohlenwasserstoffhaltiger polymerisierbarer Verbindungen von denen eine Verbindung eine C-OH-Gruppe enthält und thermischer Zersetzung der so erhaltenen Produkte in oxidierender Atmosphäre zu den entsprechenden Oxiden.

Beim erfindungsgemäßen Verfahren wird ein polymeres Produkt erzeugt, das je nach der eingesetzten Metall- oder Metalloidverbindung als schwarzes Pulver oder als schwarzer spröder Feststoff anfällt. Unter geeigneter Prozeßführung wird eine molekulardisperse Verteilung der Verbindungen im keramischen Vorprodukt erzielt. In der anschließenden thermischen Zersetzung läßt sich ein feinteiliges oxidisches Keramik-Pulver mit hoher spezifischer Oberfläche herstellen.

Die Temperaturbehandlung erfolgt in oxidierender Atmosphäre unter Luft, Sauerstoff oder deren Gemischen sowie Stickstoff-Sauerstuffgemischen. Die Beheizung kann entweder direkt über geeignete Gasbrenner oder indirekt im statischen oder bewegten Bett erfolgen. Bei bewegten Systemen, z.B. Drehrohröfen, ist evtl. eine Granulation der pulverigen polymeren Produkte zur Verringerung des Staubaustrages notwendig. Unter Einhaltung definierter Grenztemperaturen für das jeweilige Element und unter Berücksichtigung der Temperzeit lassen sich die verbindungsspezifischen Modifikationen mit entsprechender Feinteiligkeit bequem darstellen.

Es überrascht, daß im Gegensatz zu den literaturbekannten Kalzinationen von Metall- oder Metalloidverbindungen zur Darstellung von Oxidpulvern die Produkte diese extrem hohe Feinteiligkeit aufweisen. Die Ursache muß in der bisher nicht aufgeklärten Struktur der polymeren Vorstufe und dem daraus resultierenden Zersetzungsverhalten zu suchen sein. Die Ergebnisse lassen vermuten, daß das erfindungsgemäße Verfahren zu einer molekular-dispersen Verteilung der obengenannten Verbindungen im polymeren Vorprodukt führt, was sich insbesondere auch bei der Herstellung der Mischoxide als vorteilhaft erweist. Das Einbringen von Sinterhilfen und deren homogene Verteilung bereits im Vorprodukt ist ohne zusätzlichen Arbeitsschritt möglich. Bei der anschließenden Kalzination bildet sich Kohlenstoff, der aber nahezu vollständig durch Oxidation abgereichert wird. Es resultiert ein feinteiliges Oxid-Pulver mit hoher spezifischer Oberfläche.

Während der Temperaturbehandlung bewirkt der sich primär bildende Kohlenstoff, daß es nicht frühzeitig zu einer Agglomeration der sich bildenden Oxidteilchen kommt und somit die Teilchengroße begrenzt wird. Bei der anschließenden weiteren Temperaturerhöhung läßt er sich dann nahezu rückstandslos oxidativ entfernen.

Als reaktives Gemisch von kohlenwasserstoffhaltigen Verbindungen kann z.B. eine Mischung von Phenol oder Phenolderivaten mit Formaldehyd eingesetzt werden. Die Polymerisation läuft in diesem Beispiel als säurekatalysierte Polykondensationsreaktion ab.

Eine andere kohlenwasserstoffhaltige Verbindung, die Verwendung findet, ist ein polykondensierbarer einwertiger Alkohol, oder dessen einwertige Derivate, bevorzugt Furfurylalkohol oder dessen Derivate. Furfurylalkohol reagiert bei Zudosieren von Säure spontan unter Polykondensation oder je nach Menge oder Säurestärke unter heftiger Zersetzung mit Rauchentwicklung.

Um die Menge der eingesetzten Kohlenwasserstoffverbindung gering zu halten bietet es sich an, aromatische Verbindungen wie die obengenannten oder deren Mischungen einzusetzen, da diese nach der Polymerisation hohe Kohlenstoffrückstände bei der thermischen Zersetzung aufweisen.

Als Metall- und/oder Metalloid werden bevorzugt Ti, Hf, Zr, V, Nb, Ta, Cr, Mo und/oder W sowie die Hauptgruppenelemente B, Al und/oder Si als Verbindung der Formel MXₘ oder MOₚXₘ₋₂ₚ eingesetzt, mit X als Alkoholatrest oder Halogenion wie z.B. Chlorid oder Bromid und mit p = 1 oder 2 und m-2p ≧1, wobei m die Wertigkeitsstufe des Elementes M ist. Hiermit liegen Verbindungen vor, die sich leicht hochrein darstellen lassen. Aus wirtschaftlichen Gründen werden bevorzugt die Chloride wie z.B. ZrOCl₂, AlCl₃, TiCl₄, BCl₃ verwendet.

Als Metall-Organylverbindung wird bevorzugt eine Verbindung oder ein Gemisch von Verbindungen der Formel RₙMXₘ₋ₙ eingesetzt, in der R Wasserstoff und/oder eine Alkyl- und/oder Arylgruppe bedeutet, wobei n ganzzahlige Werte zwischen 1 und der um eins verringerten Wertigkeitsstufe m des Elementes M annehmen kann, Vorzugsweise ist R neben Wasserstoff ein gleicher oder verschiedener C₁- bis C₆-Rest, insbesondere eine Methyl- oder Phenylgruppe. Sie können leicht über destillative Verfahren auf hohe Reinheiten gebracht werden, Prinzipiell können auch Gemische aus Verbindungen der Formel RₙMXₘ₋ₙ untereinander oder gegebenenfalls auch mit Verbindungen der Formel MXₘ zum Einsatz kommen. Einen positiven Einfluß auf die Produktqualität oder auf die Verfahrensdurchführung ist aber nicht zu beobachten, so daß ein solches Vorgehen nur sinnvoll ist, wenn die Gemische bei der Synthese anfallen und so die Kosten der destillativen Trennung eingespart werden können.

Als funktionelle Gruppe X der Verbindung RₙMXₘ₋ₙ wird wegen seiner Wohlfeilheit die Chloridfunktion bevorzugt wie z.B. in den Verbindungen CH₃SiCl₃, (CH₃)₂SiCl₂, (CH₃)₂HSiCl und CH₃HSiCl₂. Ein weiterer Vorteil bei Verwendung der Halogenide liegt darin, daß sie als starke Lewis-Säuren aufgrund ihrer katalytischen Wirkung eine spontane Polymerisation bei vielen der reaktiven Gemische hervorrufen, Handelt es sich bei der Metall- oder Metalloidverbindung um keine starke Lewis-Säure oder läßt sich die reaktive organische Verbindung nicht säurekatalysiert polymerisieren, so wird erfindungsgemäß die Umsetzung der Verbindungen zu einem polymeren Produkt durch Säurezugabe in katalytischer Menge oder durch Zugabe eines anderen Polymerisationskatalysators zu den Verbindungen hervorgerufen.

Die Umsetzung der Verbindungen zu dem gewünschten polymeren Produkt erfolgt vorteilhaft in einem Lösungsmittel, wodurch die Prozeßführung vereinfacht wird. Zwar kann die Reaktion auch prinzipiell ohne Lösungsmittel durchgeführt werden, hierbei können jedoch Schwierigkeiten bei der Herstellung einer homogenen Mischung der Ausgangskomponenten oder Probleme bei der Abführung der Prozeßwärme auftreten, Lösungsmittel wie z.B. Toluol, Chlorbenzol, Aceton oder Methylenchlorid ermöglichen neben einer einfachen homogenen Vermischung der Reaktionspartner durch Rühren das einfache Abführen der Prozeßwärme über das verdampfende Lösungsmittel.

Die Geschwindigkeit der Umsetzung hängt von der Konzentration der Ausgangsverbindungen, deren Reaktivität und der Temperatur ab. Beim Einsatz von z.B. AlCl₃, Furfurylalkohol und Chlorbenzol als Lösungsmittel ist die Umsetzung einschließlich der Polykondensation unmittelbar nach dem Mischen bei Raumtemperatur unabhängig vom Verdünnungsmittel beendet.

Der Vorteil des erfindungsgemäßen Verfahrens, im Gegensatz zu dem oben beschriebenen Stand der Technik, ist unter anderem darin zu sehen, daß die Darstellung eines Vorprodukts mit einer molekulardispersen Verteilung der Elemente M-O-C vorliegt und es nicht wie bei dem beschriebenen Hydrolyseprozeß zur Bildung harter, schwer zerstörbarer Agglomerate kommt. Die rasche säurekatalysierte Polymerisation führt zu hochvernetzten Polymeren mit hohem Verkokungsrückstand, die nach dem Entfernen des Lösungsmittels oft als braun-schwarzes Pulver oder spröde Feststoffe anfallen. Sie sind nicht schmelzbar und somit problemlos pyrolysierbar.

Das metall- und/oder metalloidhaltige polymere Produkt kann in einer Wärmebehandlung in oxidierender Atmosphäre, die aus Luft, Sauerstoff oder Wasserdampf oder deren Mischungen besteht bis zu einer Temperatur von 2000°C erhitzt werden vorzugsweise 1200°C.

Die Zersetzung läuft im allgemeinen in mehreren Stufen ab, wobei ab 300°C der eigentliche Crackvorgang unter Gasentwicklung einsetzt. Vorher können je nach den angesetzten Ausgangsverbindungen HCl, H₂O, Alkohol oder Lösungsmittelreste entweichen.

Die eigentliche Abreicherung des bei der Zersetzung des Polymerisats entstehenden Kohlenstoffs beginnt oberhalb von 500°C.

Oberhalb von 800°C liegen die Oxide nahezu kohlenstofffrei vor. Eine Temperaturbehandlung oberhalb dieser Temperatur kann notwendig werden um beispielsweise die gewünschte Modifikation einer Verbindung zu erzeugen (α-, β-, γ-Phase) oder die spezifische Oberfläche auf gewünschte Werte einzustellen.

Die in diesem Pyrolyseschritt dargestellten Oxide sind feinteilige pulverige Feststoffe, die je nach der Temperaturbehandlung röntgenamorphe bis kristalline Strukturen mit hohen spezifischen Oberflächen aufweisen.

Die je nach Prozeßführung auftretenden lockeren Agglomerate lassen sich leicht desagglomerieren.

Das erfindungsgemäße Verfahren liefert somit feinteilige sinteraktive Pulver von hoher chemischer Reinheit und hoher spezifischer Oberfläche.

Aufgrund dieser Pulvereigenschaften ist der Einsatz als Ausgangsmaterial zur Herstellung von Sinterformkörpern besonders vorteilhaft.

Die Erfindung wird im weiteren durch die nachfolgend aufgeführten Beispiele erläutert.

### Beispiel 1

In einem 6-1-Behälter wurde unter Rühren und Stickstoffbeschleierung eine Lösung aus 2 Mol AlCl₃ (266,7 g), 2 l Chlorbenzol und 150 ml Aceton hergestellt.

Der Lösung wurde eine Mischung aus 197 g Furfurylalkohol und einem Liter Chlorbenzol innerhalb von 70 Minuten zugetropft. Unter Schwarzfärbung und Erwärmen bildete sich das Al-haltige Polymerisat. Der Ansatz wurde zwei Stunden nachgerührt.

Das polymere Zwischenprodukt wurde durch Abdestillation von Chlorbenzol bei 130°C isoliert und lag als feinteiliges schwarzes Pulver mit einer Auswaage von 479,2 g vor. Es besaß eine spezifische Oberfläche von 217 m²/g (BET Einpunktmessung).

21,6 g des polymeren Zwischenprodukts wurden in einem Kammerofen unter Luft in einem Quarzglasschiffchen innerhalb von 2 Stunden auf 900°C aufgeheizt und 12 h bei 900°C gehalten. Nach Abkühlen verblieb ein feinpulveriger weißer Rückstand von 4,6 g.

Das Röntgenbeugungsdiagramm zeigte die Reflexe von kristallinem γ-Al₂O₃. Die spezifische Oberfläche betrug 79 m²/g (BET-Einpunktmessung). Die Größe der Primärteilchen des Al₂O₃-Pulvers, aus Rasterelektronenmikroskopaufnahmen ermittelt, war kleiner als 50 nm. Die Primärteilchen waren zu lockeren Agglomeraten von <0,2 µm aufagglomeriert.

Die chemische Analyse des Pulvers lieferte einen Cl-Gehalt von 0,09 % und einen C-Gehalt von 0,1 %. Die Helium-Dichte des Pulvers betrug 4,1 ± 0,1 g/cm³.

### Beispiel 2

Gemäß Beispiel 1 wurde eine Lösung aus 533,4 g AlCl₃, 4 l Chlorbenzol, 300 ml Aceton eine Mischung aus 785 g Furfurylalkohol und 2 l Chlorbenzol zugetropft und 2 Stunden nachgerührt.

Nach Filtration und Trocknung bei 300°C wurden 175,3 g des verbliebenen Pulvers 5 h unter trockener Luft bei 1050°C geglüht.

Die Analyse des Pulvers ergab einen C-Gehalt von 0,065 % einen Cl-Gehalt von 0,013 % und einen Fe-Gehalt von <0,005 %.

Die spezifische Oberfläche (BET-Einpunktmessung) betrug 65 m²/g. Die Röntgenbeugungsanalyse ergab phasenreines α-Al₂O₃.

### Beispiel 3

Gemäß Beispiel 1 wurde eine Lösung aus 302,7 g AlCl₃ (2,27 Mol), 3 l Chlorbenzol, 200 ml Aceton unter Rühren mit 4,9 g FeCl₃ (0,03 Mol), 17,0 g SiCl₄ (0,1 Mol) und 189,7 g TiCl₄ (1 Mol) versetzt.

Der Lösung wurde eine Lösung aus 323,7 g Furfurylalkohol (3,3 Mol) und 1,5 l Chlorbenzol zugetropft, dann 2 Stunden nachgerührt. Das Lösungsmittel wurde bei 130°C unter Vakuum abdestilliert.

Es verblieben 1260 g schwarzes pulveriges Polymerisat mit einer spezifischen Oberfläche von 13,4 m²/g.

616 g des polymeren Zwischenprodukts wurden zur Herstellung von additivhaltigem Aluminiumtitanat gleichmäßig in 7 Quarzschiffchen verteilt. In einem Kammerofen wurde das Pulver 2 Stunden unter Luft bei 150°C, 1 Stunde bei 400°C und 12 Stunden bei 900°C geglüht. Die Pulverauswaage des weiß-gelben Pulvers betrug 151,2 g.

Das Röntgendiffraktogramm zeigte die Reflexe der kristallinen Phasen β-Al₂TiO₅, Rutil und Anatas. Die spezifische Oberfläche (BET-Einpunktmessung) des Pulvers betrug 105 m²/g. Die Helium-Dichte betrug 4,06 g/cm³.

## Patentansprüche

1. Verfahren zur Herstellung feinteiliger Oxide von Metallen und/oder Metalloiden der Elemente der III, und IV. Hauptgruppe sowie der III., IV., V. und VI. Nebengruppe des periodischen Systems der Elemente aus Verbindungen der Formeln MXₘ und/oder RₙMX_{m_n} und/oder MOₚXₘ₋₂ₚ, wobei X ein Halogen- oder Alkoholatrest ist und R Wasserstoff, Alkyl oder Aryl und n ganzzahlige Werte zwischen eins und der um eins verringerten maximalen Wertigkeitsstufe m des Elements M annehmen kann, p = 1 oder 2 mit m-2p ≧1, dadurch gekennzeichnet, daß die Verbindungen MXₘ und/oder RₙMXₘ₋ₙ und/oder MOₚXₘ₋₂ₚ oder deren Gemische mit einer reaktiven polymerisierbaren kohlenwasserstoffhaltigen Verbindung die eine C-OH-Gruppe enthält und/oder einem reaktiven Gemisch kohlenwasserstoffhaltiger polymerisierbarer Verbindungen von denen eine Verbindung eine C-OH-Gruppe enthält umgesetzt wird und das so erhaltene Produkt in oxidierender Atmosphäre thermisch zu den entsprechenden Oxiden zersetzt wird.

2. Verfahren gemäß Anspruch 1, dadurch gekennzeichnet, daß das reaktive Gemisch von kohlenwasserstoffhaltigen Verbindungen eine C-OH-Gruppe enthaltende Verbindung oder Gemische davon und Formaldehyd ist.

3. Verfahren gemäß Anspruch 2, dadurch gekennzeichnet, daß die C-OH-Gruppe enthaltende Verbindung Phenol und/oder ein Phenolderivat ist.

4. Verfahren gemäß Anspruch 1, dadurch gekennzeichnet, daß die reaktive, polymerisierbare, kohlenwasserstoffhaltige Verbindung ein Alkohol, bevorzugt Furfurylalkohol und/oder dessen Derivate ist.

5. Verfahren gemäß einem oder mehrerer der Ansprüche 1 bis 4, dadurch gekennzeichnet, daß als Metall- und/oder Metalloidverbindung eine oder mehrere Verbindungen der Elemente Ti, Hf, Zr, V, Nb, Ta, Cr, Mo und/oder W eingesetzt werden.

6. Verfahren gemäß einem oder mehrerer der Ansprüche 1 bis 4, dadurch gekennzeichnet, daß als Metall- und/oder Metalloidverbindung eine oder mehrere Verbindungen der Elemente B, Al und/oder Si eingesetzt werden.

7. Verfahren gemäß einem oder mehrerer der Ansprüche 1 bis 6, dadurch gekennzeichnet, daß R Methyl und/oder Phenyl bedeutet.

8. Verfahren gemäß einem oder mehrerer der Ansprüche 1 bis 7, dadurch gekennzeichnet, daß die Umsetzung der Verbindungen zu einem polymeren Produkt in einem organischen Lösungsmittel durchgeführt wird.

9. Verfahren gemäß einem oder mehrerer der Ansprüche 1 bis 8, dadurch gekennzeichnet, daß die Umsetzung der Verbindungen zu einem polymeren Produkt mit Hilfe eines Polymerisationskatalysators durchgeführt wird.

10. Verfahren gemäß einem oder mehrerer der Ansprüche 1 bis 9, dadurch gekennzeichnet, daß die Wärmebehandlung des metall- und/oder metalloidhaltigen polymeren Produkts zur Erzeugung des Oxids in oxidierender Atmosphäre bei einer Temperatur bis zu 2000°C, vorzugsweise 1200°C, unterzogen wird.

## Claims

1. Process for the preparation of finely divided oxides of metals and/or metalloids of the elements of Main Groups III and IV and Sub-Groups III, IV, V and VI of the Periodic System of Elements from compounds of the formulae MXₘ and/or RₙMXₘ₋ₙ and/or MOₚXₘ₋₂P, wherein X denotes a halogen or an alcoholate group and R denotes hydrogen, alkyl or aryl and n may assume values of integers from 1 to one less than the maximum valency stage m of the element M , p = 1 or 2 and m-2p≧1, characterised in that the compounds MXₘ and/or RₙMXₘ₋ₙ and/or MOₚXₘ₋₂p or mixtures thereof are reacted with a reactive, polymerisable, hydrocarbon-containing compound containing a C-OH group and/or with a reactive mixture of hydrocarbon-containing, polymerisable compounds, one of which contains a C-OH group, and the product thus obtained is thermally decomposed to the corresponding oxides in an oxidizing atmosphere.

2. Process according to Claim 1, characterised in that the reactive mixture of hydrocarbon-containing compounds is a C-OH group-containing compound or mixtures thereof and formaldehyde.

3. Process according to Claim 2, characterised in that the C-OH group-containing compound is phenol and/or a phenol derivative.

4. Process according to Claim 1, chracterised in that the reactive, polymerisable, hydrocarbon-containing compound is an alcohol, preferably furfuryl alcohol and/or derivatives thereof.

5. Process according to one or more of Claims 1 to 4, characterised in that one or more compounds of the Elements Ti, Hf, Zr, V, Nb, Ta, Cr, Mo and/or W are used as metal compound and/or metalloid compound.

6. Process according to one or more of Claims 1 to 4, characterised in that the metal compound and/or metalloid compound used consists of one or more compounds of the elements B, Al and/or Si.

7. Process according to one or more of Claims 1 to 6, characterised in that R denotes methyl and/or phenyl.

8. Process according to one or more of Claims 1 to 7, characterised in that the reaction of the compounds to form a polymeric product is carried out in an organic solvent.

9. Process according to one or more of Claims 1 to 8, characterised in that the reaction of the compounds to form a polymeric product is carried out with the aid of a polymerisation catalyst.

10. Process according to one or more of Claims 1 to 9, characterised in that the heat treatment of the metal-containing and/or metalloid-containing polymeric product is subjected to a temperature of up to 2000°C, preferably 1200°C, in an oxidizing atmosphere to produce the oxide.

## Revendications

1. Procédé de préparation d'oxydes finement divisés de métaux et/ou de non métaux des éléments des groupes principaux III et IV et des groupes secondaires III, IV, V et VI de la classification périodique des éléments, à partir de composés de formules MXₘ et/ou RₙMXₘ₋ₙ et/ou MOₚMXₘ₋₂ₚ, dans lesquelles X est un reste d'halogène ou d'alcoolate, R est l'hydrogène, un alkyle ou un aryle et n peut prendre des valeurs entières comprises entre 1 et la valence maximale m de l'élément M diminuée de 1, p = 1 ou 2 avec m-2p ≧ 1, caractérisé en ce que l'on fait réagir les composés MXₘ et/ou RₙMXₘ₋ₙ et/ou MOₚMXₘ₋₂ₚ ou leurs mélanges avec un composé hydrocarboné polymérisable réactif contenant un groupe C-OH et/ou un mélange réactif de composés hydrocarbonés polymérisables dont un composé contient un groupe C-OH, et en ce qu'on décompose thermiquement le produit ainsi obtenu, en atmosphère oxydante, en les oxydes correspondants.

2. Procédé selon la revendication 1, caractérisé en ce que le mélange réactif de composés hydrocarbonés est un composé contenant un groupe C-OH ou des mélanges de ce composé avec du formaldéhyde.

3. Procédé selon la revendication 2, caractérisé en ce que le composé contenant le groupe C-OH est le phénol et/ou un dérivé du phénol.

4. Procédé selon la revendication 1, caractérisé en ce que le composé hydrocarboné polymérisable réactif est un alcool, de préférence l'alcool furfurylique et/ou ses dérivés.

5. Procédé selon l'une ou plusieurs des revendications 1 à 4, caractérisé en ce que, comme composé de métal et/ou de non métal, on utilise un ou plusieurs composés des éléments Ti, Hf, Zr, V, Nb, Ta, Cr, Mo et/ou W.

6. Procédé selon l'une ou plusieurs des revendications 1 à 4, caractérisé en ce que, comme composé de métal et/ou de non métal, on utilise un ou plusieurs composés des éléments B, Al et/ou Si.

7. Procédé selon l'une ou plusieurs des revendications 1 à 6, caractérisé en ce que R signifie méthyle et/ou phényle.

8. Procédé selon l'une ou plusieurs des revendications 1 à 7, caractérisé en ce que la transformation des composés en un produit polymère s'effectue dans un solvant organique.

9. Procédé selon l'une ou plusieurs des revendications 1 à 8, caractérisé en ce que la transformation des composés en un produit polymère s'effectue à l'aide d'un catalyseur de polymérisation.

10. Procédé selon l'une ou plusieurs des revendications 1 à 9, caractérisé en ce que le traitement thermique du produit polymère contenant un métal et/ou un non métal pour la production de l'oxyde se fait sous atmosphère oxydante à une température allant jusqu'à 2000°C, de préférence 1200°C.
